(19) Europäisches Patentamt / European Patent Office / Office européen des brevets

(11) **EP 3 643 272 B1**

(12) **EUROPÄISCHE PATENTSCHRIFT**

(45) Veröffentlichungstag und Bekanntmachung des Hinweises auf die Patenterteilung:
**23.06.2021 Patentblatt 2021/25**

(21) Anmeldenummer: **18202675.7**

(22) Anmeldetag: **25.10.2018**

(51) Int Cl.:
*A61C 19/04* (2006.01)　　　　*A61C 19/10* (2006.01)
*A61C 5/00* (2017.01)　　　　*G06K 7/10* (2006.01)
*G06T 11/20* (2006.01)

(54) **VERFAHREN ZUR FESTLEGUNG EINER ZAHNFARBE**

METHOD FOR DETERMINING A TOOTH COLOUR

PROCÉDÉ DE FIXATION D'UNE COULEUR DE DENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.04.2020 Patentblatt 2020/18**

(73) Patentinhaber: **Ivoclar Vivadent AG**
**9494 Schaan (LI)**

(72) Erfinder:
• **Lerch, Stefan**
**3013 Bern (CH)**

• **Pulido Estepa, José Antonio**
**9443 Widnau (CH)**

(74) Vertreter: **Baronetzky, Klaus**
**Splanemann**
**Patentanwälte Partnerschaft**
**Rumfordstrasse 7**
**80469 München (DE)**

(56) Entgegenhaltungen:
**WO-A1-93/13398**　　**DE-A1-102006 049 743**
**DE-A1-102009 023 952**　　**FR-A1- 2 577 670**

**Beschreibung**

Die Erfindung betrifft ein Verfahren zur Festlegung einer Zahnfarbe, gemäß dem Oberbegriff von Anspruch 1, sowie ein Verfahren zur Festlegung einer Zahnfarbe gemäß dem Oberbegriff von Anspruch 12.

Zur Auswahl von Zahnfarben werden seit langem sogenannte Farbschlüssel oder Farbringe verwendet. Diese sind häufig vorklassifiziert, so dass mehrere Farbwerte zusammengefasst sind in beispielsweise Weißtonfarben, Rottonfarben, Gelbtonfarben und Grautonfarben.

Häufig wird der sogenannte Vita-Farbschlüssel verwendet, der von A1 über A4, B1 usw. bis D4 reicht.

Der Zahnarzt sucht nun für die Festlegung der Zahnfarbe einer Dentalrestauration den nächstkommenden Farbwert aus, indem er den Zahnschlüssel in die Nachbarschaft der Dentalrestauration hält, beispielsweise an den Nachbarzahn und visuell vergleicht, welche Zahnfarbe am besten passt.

Die so ermittelte Zahnfarbe merkt sich der Zahnarzt und bereitet eine Dentalrestauration aus dem entsprechenden Material vor, das wiederum mit der gleichen Zahnfarbe bezeichnet ist.

Anstelle von Keramik-Dentalrestaurationen werden heutzutage häufig aufgrund ihrer guten Verarbeitbarkeit und teilweise auch sehr guten Transluzenz Composite-Materialien verwendet. Diese lassen sich auch leicht im Mund applizieren und dann durch Licht und/oder Wärme durchhärten.

Andererseits sind derartige Füllungsmaterialien nur begrenzt haltbar. Dennoch hält der Zahnarzt natürlich sämtliche Füllungsmaterialien vor, obwohl er beispielsweise das Material D4 in 10 Jahren vielleicht einmal verwendet.

Nach Ablauf der Haltbarkeit muss das betreffende Material also ungenützt entsorgt und neu beschafft werden, eine Verschwendung sondergleichen.

Dieses Verfahren wurde bislang für sämtliche Arten von Dentalrestaurationen verwendet, also beispielsweise Kronen, Brücken, Inlays, Onlays, Füllungen, Veneers, Prefacetten, Wurzelkanalfüllungen, temporäre Restaurationen, Vollprothesen, Teilprothesen und weitere Dentalrestaurationen.

Teilweise benötigen die unterschiedlichen Dentalrestaurationen auch unterschiedliche Materialien, was die Anzahl an die Lagerhaltung belastenden und vorzuhaltenden Materialien und damit die potenzielle Verschwendung verdoppelt oder verdreifacht.

Hinzu kommt, dass je nach Anwendungsfall unterschiedliche Materialien bevorzugt sein können. Hier ist zu unterscheiden zwischen Composites einerseits und Keramiken andererseits.

Innerhalb der Composites gibt es zudem verschiedene Materialien, die sich sowohl hinsichtlich ihrer Transluzenz als auch hinsichlich ihrer Härte unterscheiden.

Bei Keramiken ist zum einen zu unterscheiden zwischen Lithiumdisilicat-Keramiken und Zirkonoxid-Keramiken, wobei Lithiumdisilicat-Keramiken sich als Metasilicat sehr gut verarbeiten lassen und dennoch praktisch keine Schrumpfung aufweisen, während die Zirkonoxid-Keramiken härter sind.

Zudem wird auch Glasionomer-Zement verwendet.

Insgesamt potenziert sich hierdurch die Anzahl der zu lagernden Dentalmaterialien, die dementsprechend in die Hunderte gehen können.

Demgegenüber liegt der Erfindung die Aufgabe zugrunde, ein Verfahren gemäß den Oberbegriffen der Ansprüche 1 und 12 zu schaffen, das es ermöglicht, die Lagerhaltung wenigstens bei einem Teil der zu verwendenden Materialien zu verbessern, ohne dass Einbußen an der physikalisch / technischen oder optischen Qualität der Dentalrestauration zu befürchten wären.

Diese Aufgabe wird erfindungsgemäß durch die Ansprüche 1 und 12 gelöst. Vorteilhafte Weiterbildungen ergeben sich aus den Unteransprüchen.

Erfindungsgemäß ist es vorgesehen, ein spezielles Verfahren für die Festlegung einer Zahnfarbe zu verwenden. Bei diesem Verfahren kommen wie nachstehend im Einzelnen erläutert spezielle Zahnfarben zum Einsatz, die für Füllungen, Inlays und Onlays besonders geeignet sind und in ihrer Anzahl drastisch reduziert sind.

Überraschend lässt sich dennoch die Lagerhaltung optimieren, obwohl hier spezielle Materialien verwendet werden, so dass man eigentlich annehmen würde, dass ein Zusatzaufwand erforderlich ist.

Diese Materialien können jedoch die bislang verwendeten Materialien für die Füllungen, Inlays und Onlays komplett ersetzen, so dass beispielsweise dann noch lediglich vier anstelle von 16 Materialien ohne Qualitätseinbussen verwendet werden können. Die Füllungsmaterialien, die dann in lediglich vier Zahnfarben vorgehalten werden müssen, können vergleichsweise elastisch und insbesondere sicher schrumpfarm ausgestaltet sein, nachdem beispielsweise im Vergleich zu Kronen bei Füllungen Schrumpfungen eine erheblich größere Relevanz haben.

Überraschend läßt sich ferner der "Ausschuß" nahezu komplett eliminieren. Die Farben sind nach einem nachfolgend erläuterten speziellen Verfahren so festgelegt, dass keine Farbe besonders selten verwendet wird; im Gegenteil, es werden alle Farben in der Praxis gleich häufig verwendet.

Damit besteht kein Ausschuß mehr, und die Nachbestellung der Zahnfarben kann so optimiert werden, dass zum Ablauf der Haltbarkeit der Lagerbestand aufgebraucht ist.

Erfindungsgemäß ist es vorgesehen, dass in einem Vorabverfahren eine Vielzahl von natürlichen Zähnen spektral vermessen wird. Die spektroskopische Vermessung kann über beispielsweise 300, 500 oder sogar 1000 Exemplare natürlicher Zähne vorgenommen werden. Die Farbwerte sämtlicher vermessener Zähne liegen dann in einem Farbraum vor beispielsweise in dem Lab-Farbraum. Sie werden dann in einem besonderen erfindungsgemäßen Verfahren in 3 bis 6 und insbesondere 4 sich dreidimensional erstreckende Farbwolken aufgeteilt, die Kategorien entsprechen.

Die Aufteilung erfolgt so, dass die Farbwolken im Wesentlichen das gleiche Volumen haben, oder, genauer gesagt, dass sie im Wesentlichen die gleiche Anzahl von gleichverteilten Farbwert-Punkten der vermessenen Zähne umfassen.

Jede Farbwolke ist im Grunde nach konvex und erstreckt sich dreidimensional im Farbraum.

Die Festlegung kann mit einem beliebigen strukturierenden Algorithmus vorgenommen werden. Ein Beispiel ist der K-Nearest-Neighbour-Algorithmus, der iterativ eine Einteilung festlegt, bis bei einem vorgegebenen Entropie-Schwellwert die Iteration abgebrochen wird.

Mit diesem Vorabverfahren ist nun festgelegt, welche Zahnfarbe für die Füllung bereitgehalten wird; insgesamt gibt es dann vier Füllungszahnfarben, die je den Farbwolken entsprechen.

Bei der Festlegung der betreffenden vier Farben wird darauf geachtet, dass der maximal mögliche Farbfehler Delta E einen nicht größer als ein bestimmter Wert ist. Dieser kann beispielsweise zu Delta E = 5,0, 5,5, 6,0 oder 6,5 festgelegt werden.

Ein solcher Farbabstand ist zwar bei näherer Betrachtung deutlich sichtbar, aber bei Füllungen höherer Transparenz ohne weiteres akzeptabel. Dies liegt insbesondere an der vergleichsweise geringen Opazität des Composites und dem sogenannten Chamäleon-Effekt, durch den der Farbfehler deutlich reduziert wird.

Distale Füllungen sowie okklusale Füllungen des Oberkiefers sind ohnehin farblich praktisch irrelevant.

Erfindungsgemäß wird nun für die Füllung eine der vier Zielfarben ausgewählt, sei es visuell oder auch über einen Vergleich des Scans mit der elektronisch vorliegenden Zielfarbe.

Diese Zielfarbenfestlegung kann in an sich bekannter Weise erfolgen, beispielsweise auch gemäß dem Least-Square-Fit-Algorithmus, wie er in der DE 10 2009 023 952 A1 beschrieben ist.

In vorteilhafter Ausgestaltung des erfindungsgemäßen Verfahrens ist es vorgesehen, zunächst um sämtliche ermittelten und vermessenen Farbwerte der natürlichen Zähne eine konvexe Hülle oder Großwolke zu legen. Diese erstreckt sich im Farbraum dreidimensional und asymetrisch / länglich, mit einem recht großen maximalen Farbabstand von beispielsweise Delta E = 40.

Basierend auf dieser Datenbasis wird nun ein gleichverteiltes Gitter von Hilfspunkten in den Farbraum gelegt, und es werden die Hilfspunkte außerhalb der Hülle rechnerisch eliminiert.

Es werden nun beispielsweise vier Punkte als Startpunkte je einer Kategorie verwendet, wobei jeder Punkt einer Kategorie zugeordnet ist.

Für jeden Hilfspunkt wird nun ermittelt, welcher Kategorie er am nächsten ist, und der betreffende Hilfspunkt erhält die zugehörige Kategorie-Farbe.

Es wird nun die Entropie für jeden Punkt ausgerechnet, entsprechend der Wahrscheinlichkeit, dass ein Punkt einer bestimmten Kategorie angehört.

Hierbei entspricht ein geringer Entropiewert einer schlechten Verteilung und ein hoher Entropiewert einer guten.

Für die beste Kategorie und für die schlechteste Kategorie wird nun der Startpunkt zu einem zufällig neuen Punkt, insbesondere einem Nachbarschaftspunkt, verändert.

Dann wird das Verfahren nach dem Startpunkt erneut durchgeführt, also es wird erneut für jeden Hilfspunkt überprüft, welcher Kategorie er am nächsten kommt.

Das Verfahren wird iterativ durchlaufen, bis der aufsummierte Entropiewert einen Schwellwert überschreitet.

Alternativ zu dieser Endbedingung kann auch überprüft werden, wann der schlechteste Entropiewert einen Schwellwert überschreitet.

In den vier so ermittelten Zielfarben werden nun Füllungsmaterialien bereitgestellt. Diese haben eine etwas geringere Opazität entsprechend einer etwas höheren Transluzenz als Standardfarben.

Hiermit gelingt es überraschend, ein ästhetisch sehr befriedigendes und von der Lagerhaltung weit effizienteres System für die Bereitstellung von füllungsähnlichen Dentalrestaurationen zu schaffen.

Weitere Vorteile, Einzelheiten und Merkmale ergeben sich aus der nachfolgenden Beschreibung eines Ausführungsbeispiels der Erfindung anhand der Zeichnung.

Es zeigen:

Fig. 1a, 1b, 1c, 1d      zweidimensionale Darstellungen der vermessenen Farbwerte der natürlichen Zähne in einem dreidimensionalen Farbraum, sowie die Hülle um die Punkte;

Fig. 2      Eine schematische Darstellung der gleichverteilten Hilfspunkte in der Hülle gemäß Fig. 1a bis 1d und außerhalb dieser;

Fig. 3      Das Ergebnis der Iteration zur Festlegung der vier aneinandergrenzenden Farbwolken für die

| | |
|---|---|
| | Festlegung der Zahnfarben; und |
| Fig. 4 | eine Darstellung des gemessenen Farbraums zu Schritt 1 des Rechenbeispiels; . |
| Fig. 5 | eine Darstellung ausgewählter Punkte des Farbraums zu Schritt 2 des Rechenbeispiels; |
| Fig. 6 | eine Darstellung ausgewählter Punkte des Farbraums zu Schritt 3 des Rechenbeispiels; |
| Fig. 7 | eine Darstellung ausgewählter Punkte des Farbraums zu Schritt 4 des Rechenbeispiels; |
| Fig. 8 | eine Darstellung ausgewählter Punkte des Farbraums zu Schritt 4a des Rechenbeispiels; |
| Fig. 9A bis 9g | eine Darstellung ausgewählter Punkte des Farbraums zu den Schritten 5 bis 11 des Rechenbeispiels; und |
| Fig. 10 | eine Darstellung ausgewählter Punkte des Farbraums zu Schritt 50.000 des Rechenbeispiels; |

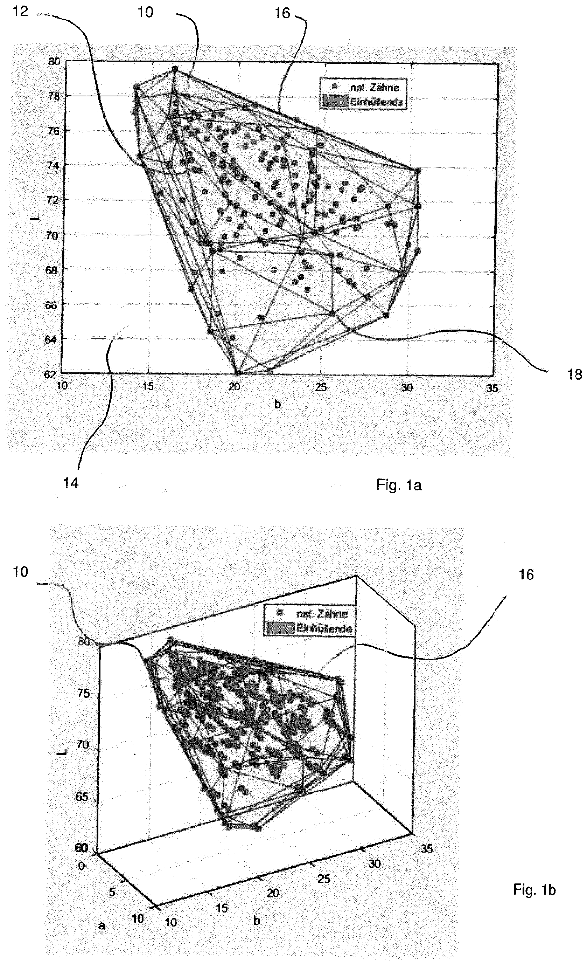

Aus Fig. 1a ist eine Wolke 10 von Punkten 12 in einem Lab-Farbraum 14 ersichtlich. Die zweidimensionale Verteilung ist in Fig. 1a über L und b aufgetragen. Es ist zudem eine einhüllende Hülle 16 vorgesehen, die sich entlang der je äußersten Punkte 12 erstreckt und innerhalb derer sich damit sämtliche Punkte 12 erstrecken.

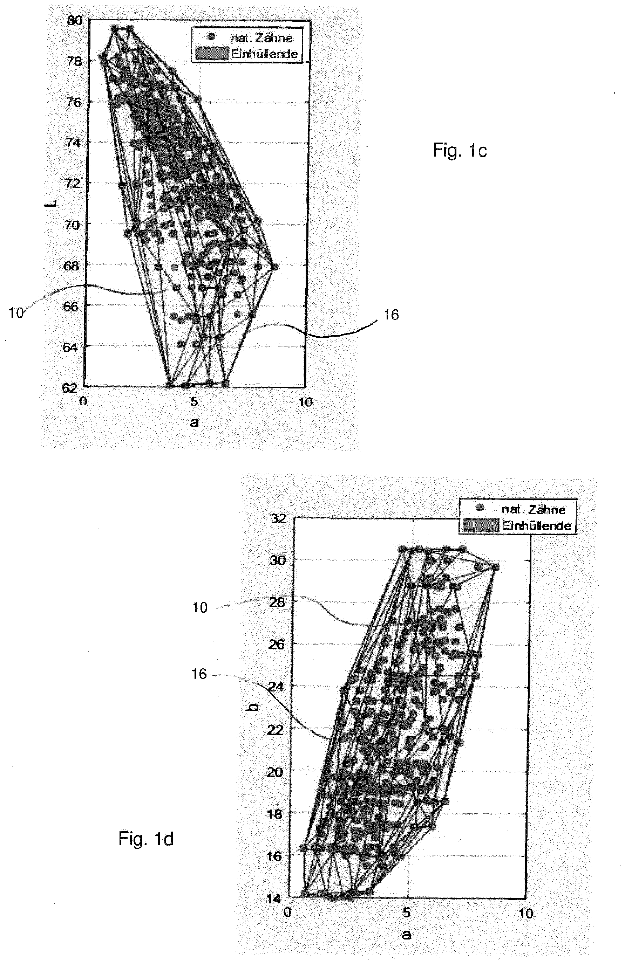

In den Fig. 1b, 1c und 1d sind die Punkte 12 und die Hülle 16 ebenfalls zweidimensional dargestellt, in Fig. 1b ist in dreidimensionaler Perspektive mit b in X-Richtung, a in Z-Richtung und L in Y-Richtung.

In Fig. 1c ist die gleiche Punkte-Wolke in der Dimension L über a aufgetragen, und in Fig. 1d in der Dimension b über a.

Aus der Verteilung ist ersichtlich, dass bei Werten L <= 68, b = 20 bis 25 und a = 4 bis 6 lediglich wenige Punkte bestehen, aber immerhin noch Punkte vorhanden sind, während beispielsweise bei diesen L-Werten und B-Werten bei a <=3 oder a => 7 keine Punkte vermessen werden konnten. Andererseits liegt die Zahnfarbe C4 etwa bei a = 2, b = 24 und L = 62, also außerhalb der tatsächlich gemessenen Werte, innerhalb der realisierten Stichprobe von 368 natürlichen Zähnen.

Daraus ergibt sich praktisch die Aussage, dass die Zahnfarbe C4 bei den gemessenen natürlichen Zähnen nicht vorkommt und daher als Zielzahnfarbe nicht relevant ist.

Wie ersichtlich ist, sind die je an den Rändern der Hülle 16 gemessenen Farbwerte gleichsam Eckpunkte der dreidimensionalen Hülle. Beispielsweise sei der Punkt 18 hier herausgegriffen. Dieser ist über schematische Striche mit benachbarten Punkten verbunden, die sich ebenfalls auf der Hülle 16 erstrecken. Insofern ist die Hülle 16 als Polyeder dargestellt, wenn sie auch rechnerisch durch konvexe Außenflächen abgebildet wird, wobei die Hülle von Punkten ähnlich dem Punkt 18 eingenommen wird.

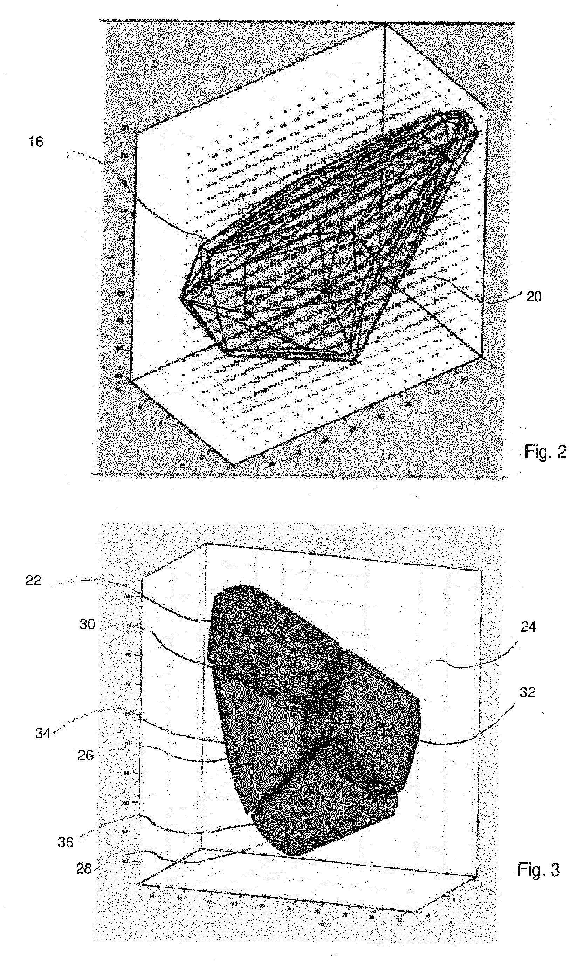

Aus Fig. 2 ist ersichtlich, wie ein dreidimensionales Raster oder Gitter von Hilfspunkten 20 über den relevanten Farbraum gelegt wird. Die Hilfspunkte erstrecken sich sowohl innerhalb als auch außerhalb der Hülle 16, wobei in der Praxis die sich außerhalb erstreckenden Punkte gelöscht oder rechnerisch unterdrückt werden.

Es werden nun mit einem strukturierteren Verfahren, insbesondere dem K-Nearest-Neighbour-Algorithmus nach Festlegung von vier beliebigen Startpunkten aus Fig. 3 ersichtliche Farbwolken 22, 24, 26 und 28 basierend auf den Hilfspunkten 20 gebildet, in welchen Farbwolken sich sämtliche Punkte 12 gemäß Fig. 1 befinden.

Diese vier Farbwolken 22 bis 28 entsprechen den vier Kategorien. Der geometrische Mittelpunkt, 30, 32, 34 und 36 jeder Farbwolke entspricht der Zielzahnfarbe. Es ergibt sich, dass innerhalb des ermittelten Farbraum, also innerhalb der Wolke 10 kein größerer Farbabstand zwischen dem jeweiligen benachbarten Mittelpunkt 30 bis 36 und einer beliebigen Zahnfarbe besteht als ein vorgegebener Schwellenwert, der im Beispielsfall als Delta E = 5,8 ermittelt wurde

**Konkretes Rechenbeispiel:**

Schritt 1

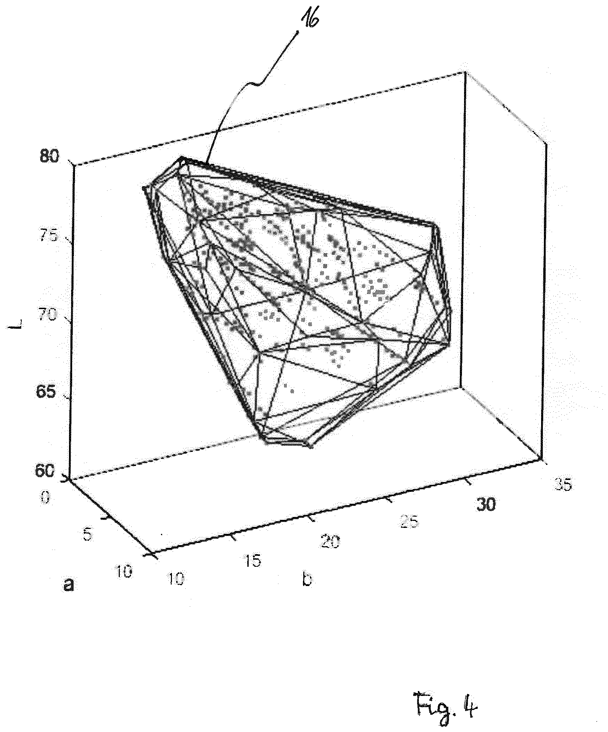

Wie aus Fig. 4 ersichtlich ist, sind in dem dreidimesionalen Lab-Farbraum zahlreiche Punkte eingertragen. Diese entsprechen den gemessenen Zahnfarben der natürlichen Zähne. Diese definieren den Zahnfarbenraum, vg. Fig. 1A und 1b.

Die blauen Flächen darum bilden die Hülle 16 um diese roten Punkte.

**Schritt 2**

Aus diesen roten Punkten werden nun zufällig 4 ausgewählt und werden als Kategoriewerte definiert. Die Anzahl der Kategoriewerte ist k, also hier k=4.

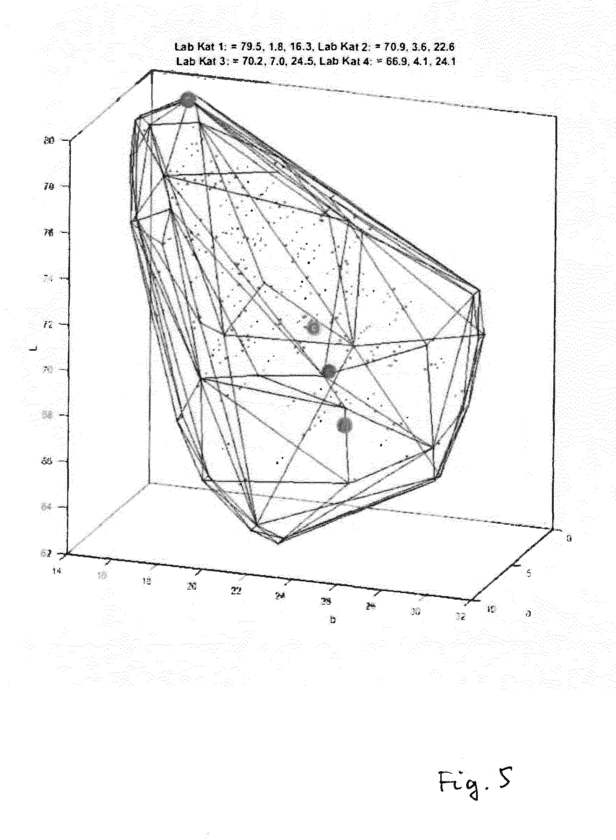

Dies ist aus Fig. 5 ersichtlich.

Im vorliegenden Fall haben diese folgende Lab-Werte:

|       | L    | a   | b    |
|-------|------|-----|------|
| Kat. 1 | 79,5 | 1,8 | 16,3 |
| Kat. 2 | 70,9 | 3,6 | 22,6 |
| Kat. 3 | 70,2 | 7,0 | 24,5 |
| Kat. 4 | 66,9 | 4,1 | 24,1 |

**Schritt 3**

Alle Punkte werden einer Kategorie zugeordnet. Die Zuordnung findet mit Hilfe des Farbabstandes zu den jeweiligen Kategoriewerten statt, deshalb nennt man den Algorithmus "Nächste-Nachbarn"-Algorithmus, oder nearest-neighbour-Algorithmus.

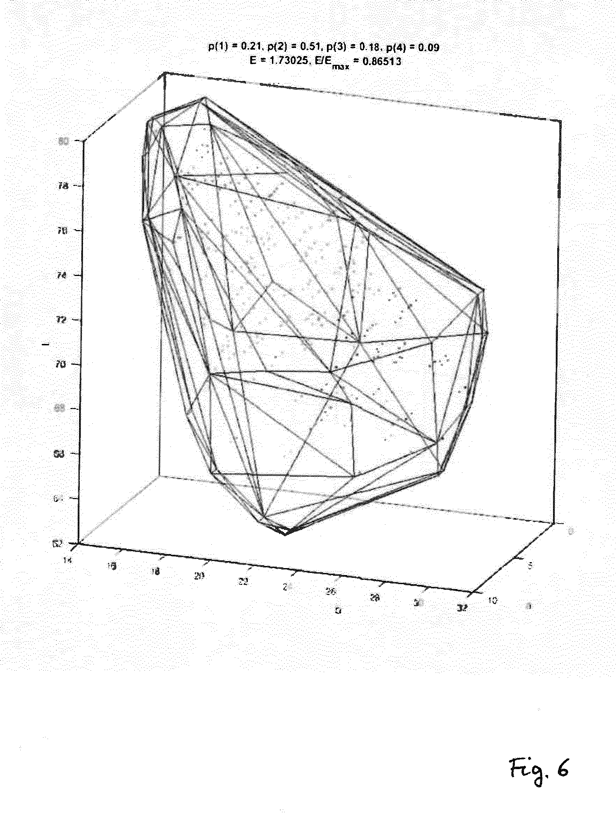

Oben in Fig. 6 ist die Kategoriewahrscheinlichkeit p(j) angegeben, also die Wahrscheinlichkeit, dass ein Punkt zu Kategorie j gehört.

Bei k=4 kann j die Werte 1,2,3 und 4 annehmen

Hier: 21% der Punkte gehörten zu Kategorie 1, 51% zu Kategorie 2,18% zu 3 und 9 % zu Kategorie 4.

Der Wert E entspricht der Entropie. Dieser ist am höchsten, wenn in allen Kategorien gleich viele Punkte sind (also je 25%). Das Maximum für $E/E_{max}$ ist also 1.

Hier erreichen wir 0.865

**Schritt 4**

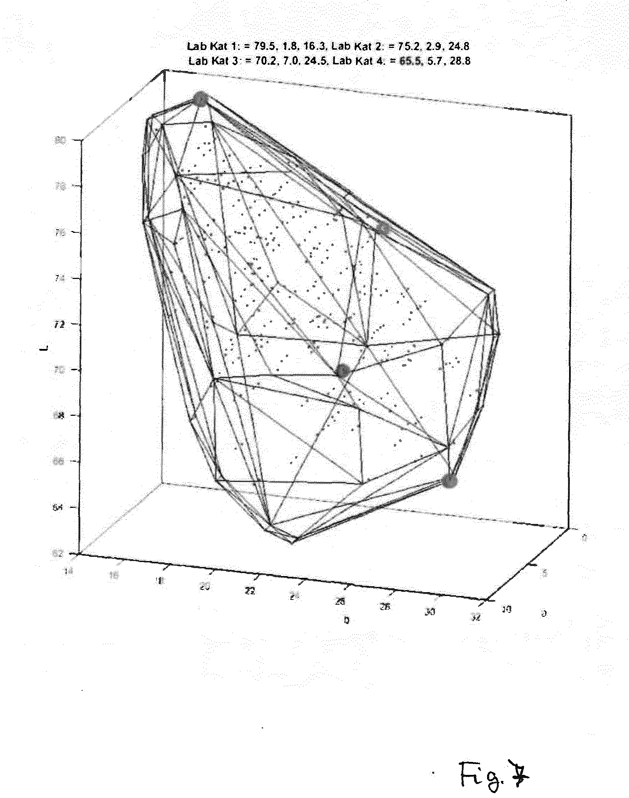

In der kleinsten und grössten Kategorie (hier: die rosafarbenen und hellblauen Punkte, siehe Fig. 7) werden neue Kategoriewerte ermittelt. Dies sind Kategorien 2 und 4.

Für die rosa Kategorie werden alle rosa Punkten genommen und zufällig darin ein neuer Punkt als Kategoriewert bestimmt. Das Gleiche passiert mit hellblau.

Die Kategoriewerte von grün und blau bleiben gleich.

|       | L    | a   | b    |
|-------|------|-----|------|
| Kat. 1 | 79,5 | 1,8 | 16,3 |
| Kat. 2 | 75,2 | 2,9 | 24,8 |
| Kat. 3 | 70,2 | 7,0 | 24,5 |
| Kat. 4 | 65,5 | 5,7 | 28,8 |

**Schritt 4a**

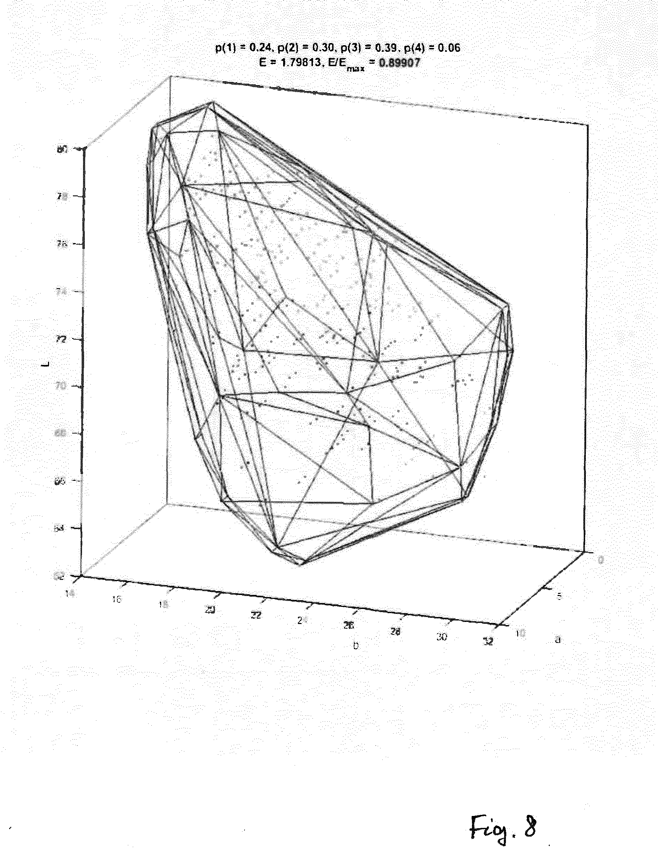

Für alle Punkte wird gemäß Fig. 8 wiederum die Zuordnung mit Hilfe des Farbabstandes zu den Kategoriewerten ermittelt.

Es ergeben sich neue Wahrscheinlichkeiten und damit eine neue Entropie, wie es oben in Fig. 8 eingetragen ist.

**Schritt 5**

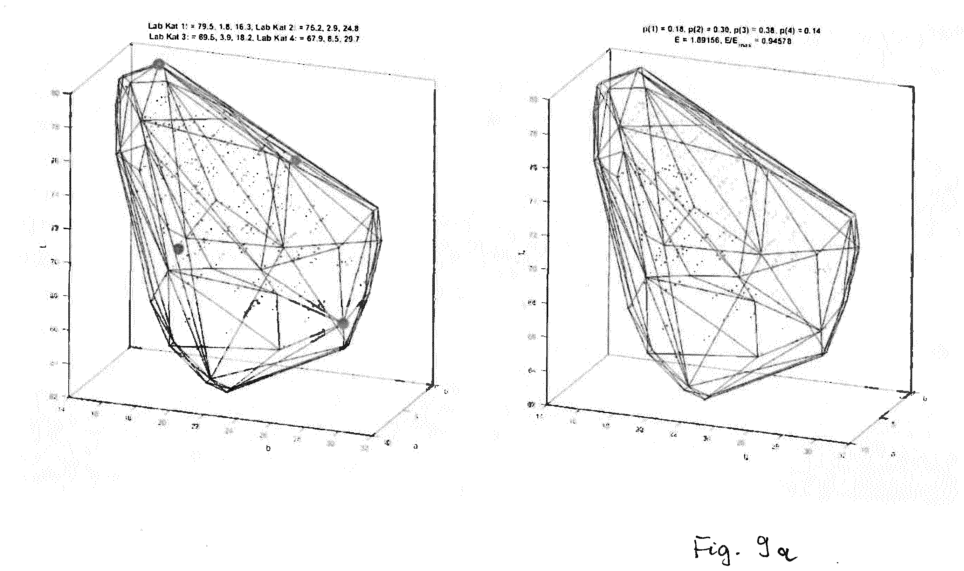

Nun wird das Ganze immer und immer wieder wiederholt, siehe zunächst Fig. 9a. Die Kategorien 3 und 4 waren hier die mit den Extremwerten der Wahrscheinlichkeiten, so dass diese neu festgelegt wurden.

Die Lab-Werte sind oben links in Fig. 9A eingetragen, und die Wahrscheinlichkeiten p(j) und die Entropie E oben rechts.

**Schritt 6**

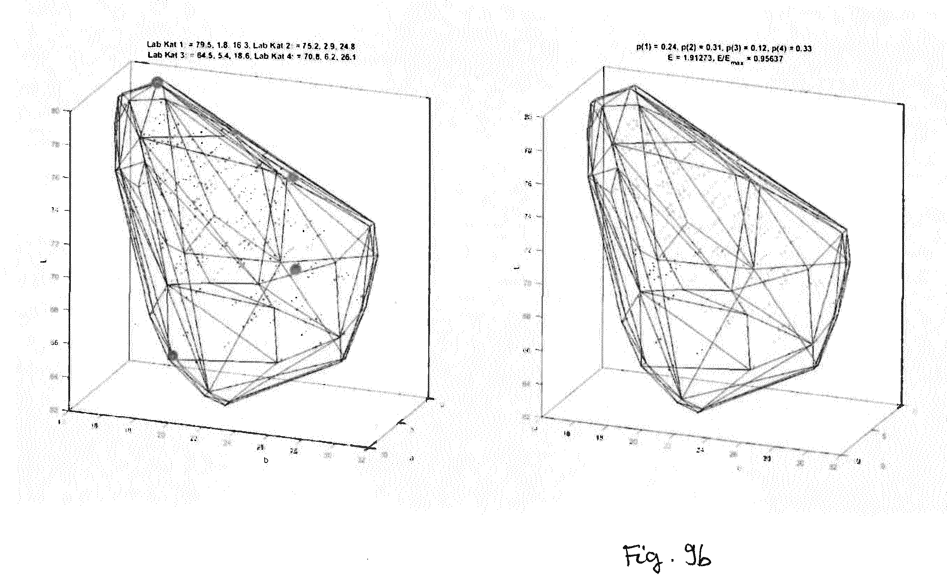

Der nächste Iterationsschritt ist aus Fig. 9b ersichtlich.

**Schritt 7**

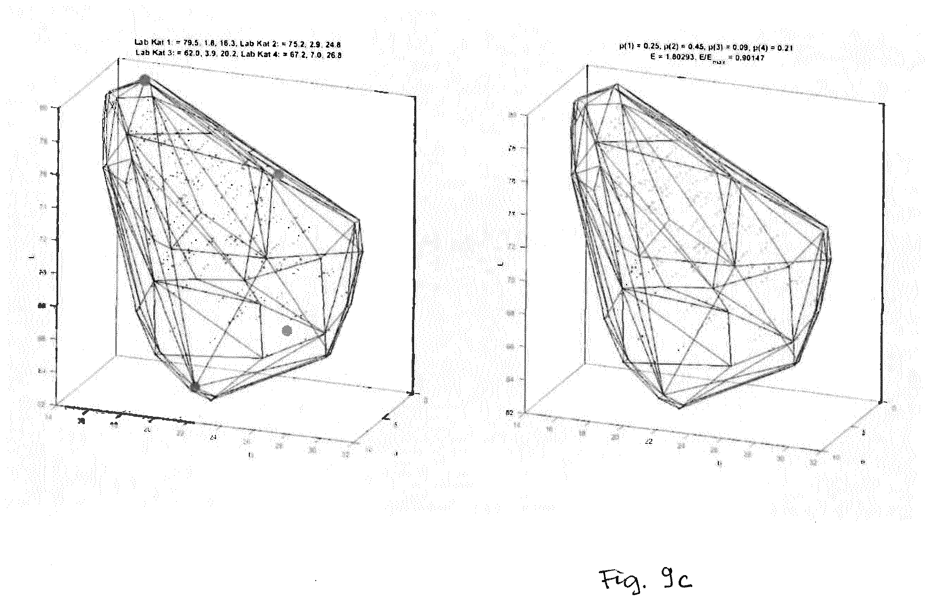

Der nächste Iterationsschritt ist aus Fig. 9c ersichtlich.

**Schritt 8**

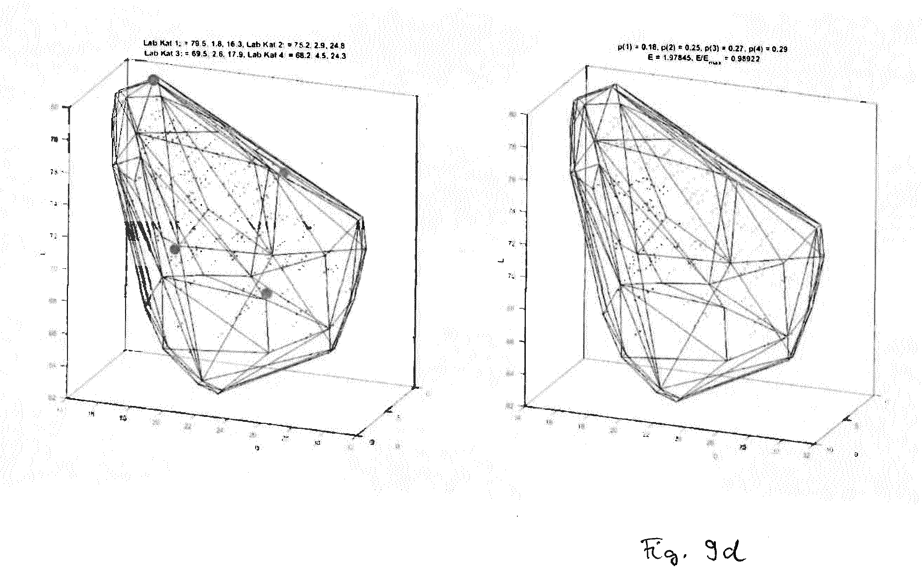

Der nächste Iterationsschritt ist aus Fig. 9d ersichtlich.

**Schritt 9**

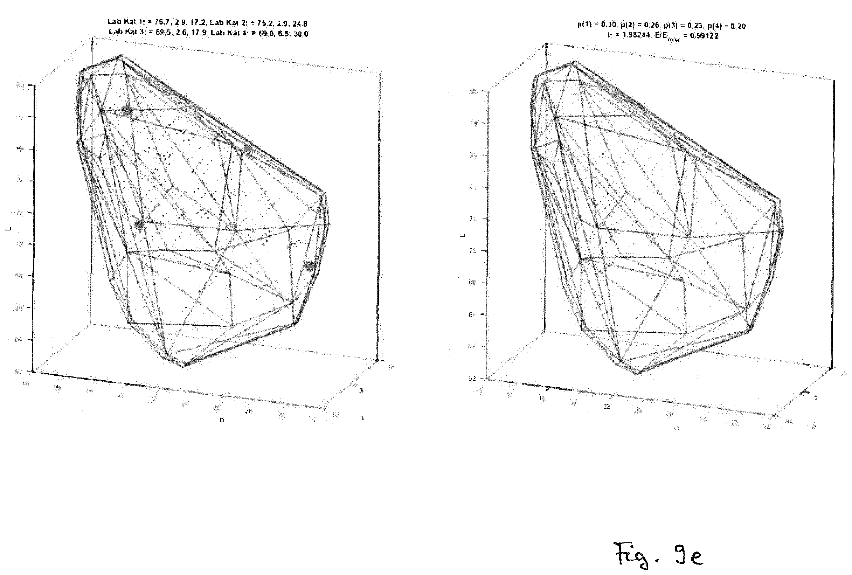

Der nächste Iterationsschritt ist aus Fig. 9e ersichtlich.

**Schritt 10**

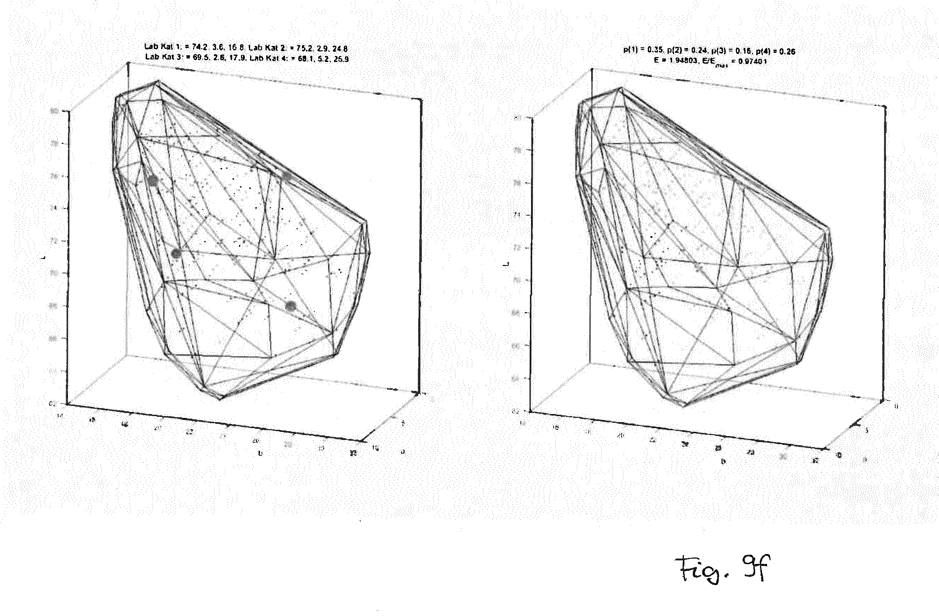

Der nächste Iterationsschritt ist aus Fig. 9f ersichtlich.

**Schritt 11**

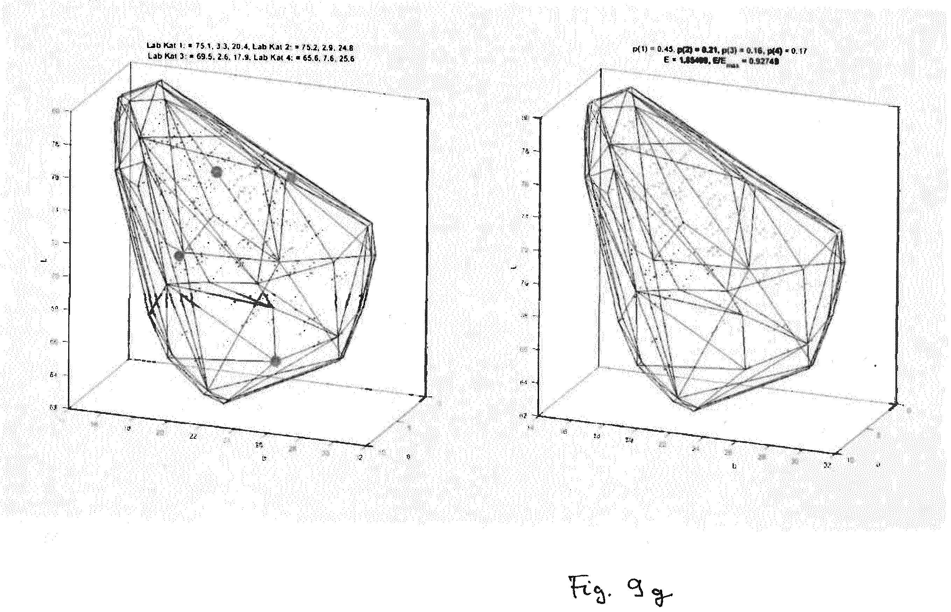

Der nächste Iterationsschritt ist aus Fig. 9g ersichtlich. Usw.

**Schritt 50'000**

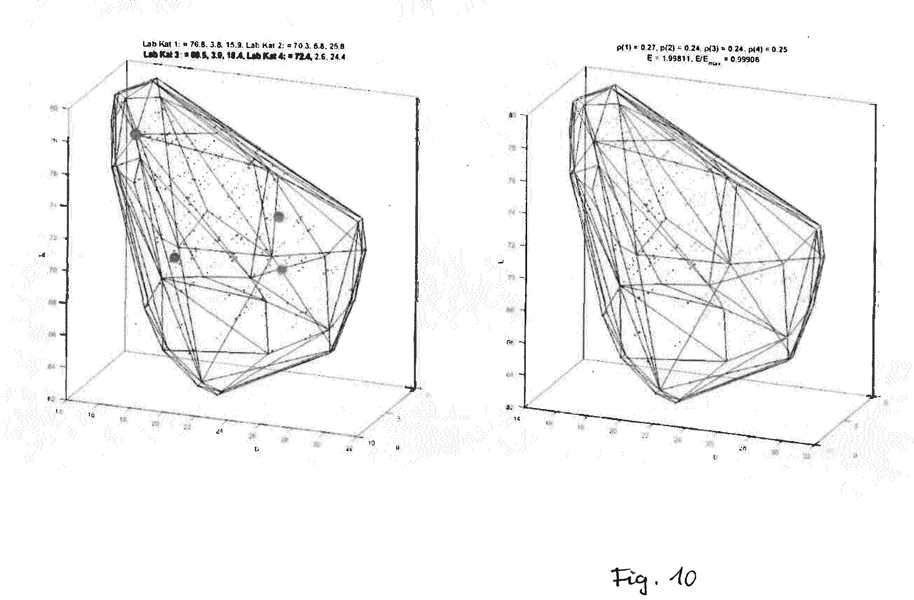

Der 50000. Iterationsschritt ist aus Fig. 10 ersichtlich

Es ergeben sich die folgenden Lab-Werte:

|        | L    | a   | b    |
|--------|------|-----|------|
| Kat. 1 | 76,8 | 3,8 | 15,9 |
| Kat. 2 | 70,3 | 5,8 | 25,8 |
| Kat. 3 | 69,5 | 3,9 | 18,4 |
| Kat. 4 | 72,4 | 2,6 | 24,4 |

**Schritt 50'001**

Man nimmt den Mittelwert aller Punkte in der jeweiligen Kategorie. Diese bilden die Lab-Werte für das erfindungsgemäße Verfahren.

**Schritt 50'002**

Dieses Beispiel zeigt einen Iterationsumgang.

In vorteilhaften Ausgestaltung wird der Algorithmus mehrmals durchlaufen und das beste Ergebnis (dasjenige mit der höchsten Entropie, respektive mit gleichvielen Punkten in jeder Kategorie) wird als bestes Endergebnis verwendet.

Letzlich ergeben sich dann die Werte gemäß Anspruch 13, also:

|        | L    | a   | b    |
|--------|------|-----|------|
| Kat. 1 | 75,8 | 2,7 | 17,2 |
| Kat. 2 | 74,2 | 3,8 | 22,7 |
| Kat. 3 | 69,9 | 5,8 | 26,2 |
| Kat. 4 | 70.0 | 4,3 | 19,5 |

**Patentansprüche**

1. Verfahren zur Festlegung einer Zahnfarbe einer Füllung oder sonstigen Restauration, die insbesondere unter Verwendung von Composite-Materialien hergestellt wird, wobei mind. ein Zahn hinsichtlich seines Farbwertes elektronisch erfasst, insbesondere gescannt wird, **dadurch gekennzeichnet, dass** natürliche Zähne in einem ersten Schritt spektral vermessen werden, dass die gemessenen Farbwerte in einem Farbraum in drei bis sechs, insbesondere vier, Kategorien, die in dem Farbraum je eine dreidimensionale Farbwolke (22, 24, 26, 28) bilden, eingeteilt wird, und zwar mittels eines strukturerkennenden Algorithmus, und dass die Zahnfarbe der Füllung festgelegt wird, indem ermittelt wird, zu welcher der Kategorien der Zahn den geringsten Farbabstand hat oder in welche Farbwolke (22, 24, 26, 28) der Zahn fällt.

2. Verfahren nach Anspruch 1, **dadurch gekennzeichnet, dass** exakt eine Zahnfarbe, die gemäß Anspruch 1 festgelgt wurde, für die Füllung oder Restauration verwendet wird.

3. Verfahren nach Anspruch 1 oder 2, **dadurch gekennzeichnet, dass** die natürlichen Zähne gemäß Anspruch 1 aus einer Vielzahl, mindestens 20, verschiedenen bestehenden natürlichen Zähnen ausgewählt werden, insbesondere unabhängig von der aktuell bereitzustellenden Restauration.

4. Verfahren nach einem der vorhergehenden Ansprüche, **dadurch gekennzeichnet, dass** basierend auf der spektralen Vermessung für jeden natürlichen Zahn ein Punkt im Farbraum (14) festgelegt wird und dass basierend auf den Punkten (12) aller vermessenen Zähne eine konvexe Hülle (16) im Farbraum (14) festgelegt wird, innerhalb derer die Farbwert-Punkte (12) aller dieser Zähne liegen.

5. Verfahren nach Ansprüche 4, **dadurch gekennzeichnet, dass** eine Struktur aus insbesondere gleichverteilten Punkten (12) über den Farbraum (14) gelegt wird und basierend auf Anfangskategorien unter Überprüfung, welche Anfangskategorie einem Punkt am nächsten ist Kategoriegrenzen zwischen einzelnen Kategrorien als sich dreidimensional erstreckenden Flächen iterativ festgelegt werden.

6. Verfahren nach einem der vorhergehenden Ansprüche, **dadurch gekennzeichnet, dass** die Einteilung in Kategorien basierend auf der größten Anzahl von benachbarten Punkten (12) - entsprechend je einem natürlichen Zahn

   - in der betreffenden Kategorie vorgenommen wird.

7. Verfahren nach Ansprüche 6, **dadurch gekennzeichnet, dass** als Abstandsmaß ein Euklidischer Abstand verwendet wird.

8. Verfahren nach einem der vorhergehenden Ansprüche, **dadurch gekennzeichnet, dass** der Algothmus ein nearest-neighbour-Algorithmus oder eins Symmetrieerkennungsalgorithmus ist.

9. Verfahren nach einem der vorhergehenden Ansprüche, **dadurch gekennzeichnet, dass** für die Festlegung der Kategorien zunächst beliebige Anfangskategorien gewählt werden, dass über den gesamten Farbraum (14) die Entropie der Kategorisierung als Gütemass berechnet wird und dass mittels des nearest-neighbour-Algorithmus. Insbesondere eines k-nearest-neighbour-Algorithmus, unter Vorgabe der Anzahl der Kategorien iterativ die besten Kategoriegrenzen festgelegt werden.

10. Verfahren nach Ansprüchen 8 oder 9, **dadurch gekennzeichnet, dass** die Anzahl der Kategorien zunächst versuchsweise auf einen bestimmten Wert, z.B. 4, festgelegt wird, und dass ein maximal zulässiger Farbabstandswert, z.B. Delta E = 5,8, festgelegt wird, und dass die Anzahl der Kategoreien erhöht wird, wenn dieser Farbabstandswert im ungünstigsten Fall überschritten wird.

11. Verfahren nach Ansprüchen 8, 9 oder 10, **dadurch gekennzeichnet, dass** die Anzahl der Kategorien zunächst versuchsweise auf einen bestimmten Wert, z.B. 4, festgelegt wird, und dass ein zweiter maximal zulässiger Farbabstandswert, z.B. Delta E = 3, festgelegt wird, und dass die Anzahl der Kategoreien vermindert wird, wenn dieser Farbabstandswert im ungünstigsten Fall unterschritten wird.

12. Computergesteuertes Verfahren zur Festlegung einer Zahnfarbe einer Füllung, eines Inlays oder Onlays, die insbesondere unter Verwendung von Composite-Materialien hergestellt wird, wobei mindestens ein Zahn gescannt oder visuell erfasst wird, **dadurch gekennzeichnet, dass** natürliche Zähne in einem ersten Schritt spektral vermessen werden, dass die Farbwerte in einem Farbraum (14) in drei bis sechs, insbesondere vier, Kategorien, die in dem Farbraum (14) je eine sich dreidimensional erstreckende Farbraum bilden, eingeteilt werden, und zwar mittels eines strukturerkennenden Algorithmus, und dass die Zahnfarbe der Füllung festgelegt wird, in dem ermittelt wird, zu welchem Mittelpunkt (30, 32, 34, 36) der Farbwolke (22, 24, 26, 28) einer der Kategorien der Zahn den geringsten Farbabstand hat, wobei die Mittelpunkte (30, 32, 34, 36) von ihren Farbwerten her vorab festgelegt sind.

13. Computergesteuertes Verfahren nach Anspruch 12, **dadurch gekennzeichnet, dass** vier den Kategorien entsprechende Farbwolken (22, 24, 26, 28) ausgebildet sind, und dass die Mittelpunkte (30, 32, 34, 36) je an der folgenden Stelle liegen:

| | L | a | b |
|---|---|---|---|
| 1. | 75,8 | 2,7 | 17,2 |
| 2. | 74,2 | 3,8 | 22,7 |
| 3. | 69,9 | 5,8 | 26,2 |
| 4. | 70.0 | 4,3 | 19,5, |

wobei um die Mittelpunkte (30, 32, 34, 36) sich Unschärfebereiche mit folgenden Farbabständen erstrecken, in denen die Mittelpunkte (30, 32, 34, 36) auch liegen können:

$$\text{Delta L} = +/-\ 2,\ \text{Delta a} = +/-\ 1,\ \text{Delta b} = +/-\ 2$$

**Claims**

1. A method for determining a tooth color of a filling or another restoration, which is produced especially by using composite materials, wherein at least a tooth is electronically detected, especially scanned, with respect to its color value, **characterized in that** natural teeth are spectrally measured in a first step, that the color values measured are divided into three to six, especially four categories in a color space using a structure-recognizing algorithm, each category forming a three-dimensional color cloud (22, 24, 26, 28) in the color space, and **in that** the tooth color of the filling is determined by assessing which category has the smallest color distance from the tooth or which color cloud (22, 24, 26, 28) the tooth belongs to.

2. The method according to claim 1, **characterized in that** exactly one tooth shade determined according to claim 1 is used for the filling or restoration.

3. The method according to claim 1 or 2, **characterized in that** the natural teeth according to claim 1 are selected from a plurality, at least 20, different existing natural teeth, especially independent of the restoration to be currently provided.

4. The method according to one of the preceding claims, **characterized in that**, based on the spectral measurement, a point in the color space (14) is determined for each natural tooth, and that, based on the points (12) of all measured teeth, a convex envelope (16) is determined in the color space (14), within which envelope the color value points (12) of all of these teeth are located.

5. The method according to claims 4, **characterized in that** a structure of especially equally distributed points (12) is placed over the color space (14) and, based on initial categories, while determining which initial category is closest to a respective point, category boundaries are iteratively defined between individual categories as three-dimensionally extending areas.

6. The method according to one of the preceding claims, **characterized in that** the division into categories is carried out based on the largest number of adjacent points (12) in the respective category - each point corresponding to one natural tooth.

7. The method according to claims 6, **characterized in that** a Euclidean distance is used as a distance measure.

8. The method according to one of the preceding claims, **characterized in that** the algorithm is a nearest-neighbor algorithm or a symmetry detection algorithm.

9. The method according to one of the preceding claims, **characterized in that** for determining the categories, arbitrary starting categories are initially chosen, that, across the entire color space (14), the entropy of the categorization is calculated as a quality measure and that, using the nearest-neighbor algorithm, in particular a k-nearest-neighbor algorithm, and the number of categories being predetermined, the optimum category boundaries are iteratively determined.

10. The method according to claims 8 or 9, **characterized in that** the number of categories is first tentatively set to a certain value, e.g. 4, and that a maximum permissible color distance value, e.g. delta E = 5.8, is set, and that the number of categories is increased if this color distance value will at worst be exceeded.

11. The method according to claims 8, 9 or 10, **characterized in that** the number of categories is first tentatively set to a certain value, e.g. 4, and that a second maximum permissible color distance value, e.g. Delta E = 3, is set, and that the number of categories is reduced if this color distance value will at worst not be reached.

12. A computer-controlled method for determining a tooth color of a filling, an inlay or an onlay, which is especially produced using composite materials, wherein at least one tooth is scanned or visually recorded, **characterized in that**, in a first step, natural teeth are spectrally measured, that the color values in a color space (14) are divided into three to six, especially four categories by means of a structure-recognizing algorithm, each category forming a three-dimensionally extending color space in the color space (14), and **in that** the tooth color of the filling is determined by determining which center point (30, 32, 34, 36) of the color cloud (22, 24, 26, 28) of one of the categories has the smallest color distance from the tooth, the center points (30, 32, 34, 36) being predetermined in terms of their color values.

13. The computer-controlled method according to claim 12, **characterized in that** four color clouds (22, 24, 26, 28) corresponding to the categories are formed, and that the center points (30, 32, 34, 36) are each located at the following position:

|    | L    | a   | b    |
|----|------|-----|------|
| 1. | 75.8 | 2.7 | 17.2 |
| 2. | 74.2 | 3.8 | 22.7 |
| 3. | 69.9 | 5.8 | 26.2 |
| 4. | 70.0 | 4.3 | 19.5 |

wherein areas of unsharpness having the following color distances extend around the center points (30, 32, 34, 36), in which areas of unsharpness the center points (30, 32, 34, 36) may also be located:

Delta L = +/- 2, Delta a = +/-1, Delta b = +/- 2.

**Revendications**

1. Procédé pour déterminer la couleur de dent d'une obturation ou d'une autre restauration fabriquée en particulier avec des matériaux composites, où au moins une dent est enregistrée électroniquement, en particulier scannée, en ce qui concerne sa valeur chromatique, **caractérisé en ce que** les dents naturelles sont mesurées spectralement dans une première étape, **en ce que** les valeurs chromatiques mesurées sont divisées en trois à six, en particulier quatre, catégories dans un espace chromatique, qui forment chacune un nuage chromatique tridimensionnel (22, 24, 26, 28) dans l'espace chromatique, au moyen d'un algorithme de reconnaissance de structure, et **en ce que** la couleur de dent de l'obturation est déterminée en déterminant dans quelle catégorie la dent présente la plus petite distance chromatique ou dans quel nuage chromatique (22, 24, 26, 28) la dent se situe.

2. Procédé selon la revendication 1, **caractérisé en ce qu'**exactement une teinte de dent, déterminée selon la revendication 1, est utilisée pour l'obturation ou la restauration.

3. Procédé selon la revendication 1 ou 2, **caractérisé en ce que** les dents naturelles selon la revendication 1 sont choisies parmi une pluralité de dents naturelles existantes différentes, au moins 20, en particulier indépendamment de la restauration à réaliser actuellement.

4. Procédé selon l'une des revendications précédentes, **caractérisé en ce que**, sur la base de la mesure spectrale, un point dans l'espace couleur (14) pour chaque dent naturelle est défini, et **en ce que**, sur la base des points (12) de toutes les dents mesurées, une enveloppe convexe (16) est définie dans l'espace couleur (14), à l'intérieur de laquelle se trouvent les points de valeur de teinte (12) de toutes ces dents.

5. Procédé selon la revendication 4, **caractérisé en ce qu'**une structure de points (12), en particulier également répartis, est posée sur l'espace couleur (14) et, sur la base de catégories initiales, tout en vérifiant quelle catégorie initiale est la plus proche d'un point, des limites de catégories entre des catégories individuelles sont définies de manière itérative en tant que zones s'étendant en trois dimensions.

6. Procédé selon l'une des revendications précédentes, **caractérisé en ce que** la division en catégories est effectuée dans la catégorie concernée sur la base du plus grand nombre de points adjacents (12) - correspondant chacun à une dent naturelle.

7. Procédé selon la revendication 6, **caractérisé en ce qu'**une distance euclidienne est utilisée comme mesure de distance.

8. Procédé selon l'une des revendications précédentes, **caractérisé en ce que** l'algorithme est un algorithme des voisins les plus proches ou un algorithme de détection de symétrie.

9. Procédé selon l'une des revendications précédentes, **caractérisé en ce que**, pour la détermination des catégories, sont sélectionnées d'abord des catégories initiales quelconques, **en ce que** l'entropie de la catégorisation est calculée comme mesure de qualité sur l'ensemble de l'espace couleur (14), et **en ce que** les meilleures limites de catégories sont déterminées de manière itérative au moyen de l'algorithme des voisins les plus proches, en particulier un algorithme des k voisins les plus proches, en spécifiant le nombre de catégories.

10. Procédé selon les revendications 8 ou 9, **caractérisé en ce que** le nombre de catégories est d'abord fixé à une certaine valeur, par exemple 4, à titre d'essai, et **en ce qu'**une valeur maximale admissible d'espacement des couleurs, par exemple delta E = 5,8, est déterminée, et **en ce que** le nombre de catégories est augmenté si cette valeur d'espacement des couleurs est dépassée dans le pire des cas.

11. Procédé selon les revendications 8, 9 ou 10, **caractérisé en ce que** le nombre de catégories est d'abord défini à titre d'essai à une certaine valeur, par exemple 4, et qu'une deuxième valeur maximale admissible d'espacement des couleurs, par exemple Delta E = 3, est définie, et que le nombre de catégories est réduit si cette valeur d'espacement des couleurs est dépassée dans le pire des cas.

12. Procédé commandé par ordinateur pour déterminer une teinte de dent d'un plombage, d'un inlay ou d'un onlay, qui est fabriqué en particulier avec des matériaux composites, où au moins une dent est scannée ou enregistrée visuellement, **caractérisé en ce que** des dents naturelles sont mesurées spectralement dans une première étape, **en ce que** les valeurs de couleur dans un espace de couleur (14) sont divisées en trois à six, en particulier quatre catégories, qui forment chacune un espace de couleurs s'étendant en trois dimensions dans l'espace de couleurs (14), au moyen d'un algorithme de reconnaissance de structure, et **en ce que** la teinte de dent de l'obturation est définie en déterminant par rapport à quel point central (30, 32, 34, 36) du nuage de couleurs (22, 24, 26, 28) de l'une des catégories la dent présente la plus petite distance de couleur, où les points centraux (30, 32, 34, 36) sont prédéterminés en termes de leurs valeurs de couleur.

13. Procédé commandé par ordinateur selon la revendication 12, **caractérisé en ce que** quatre nuages de couleurs (22, 24, 26, 28) correspondant aux catégories sont formés, et **en ce que** les points centraux (30, 32, 34, 36) sont chacun situés à la position suivante :

| | L | a | b |
|---|---|---|---|
| 1. | 75,8 | 2,7 | 17,2 |
| 2. | 74,2 | 3,8 | 22,7 |
| 3. | 69,9 | 5,8 | 26,2 |
| 4. | 70.0 | 4,3 | 19,5, |

où des régions de flou avec les distances de couleur suivantes s'étendent autour des points centraux (30, 32, 34, 36), dans lequel les points centraux (30, 32, 34, 36) peuvent également se trouver :

$$\text{Delta L} = +/- 2, \text{Delta a} = +/- 1, \text{Delta b} = +/- 2.$$

Fig. 1a

Fig. 1b

Fig. 1c

Fig. 1d

16

20

Fig. 2

22

30

34

26

36

28

24

32

Fig. 3

Fig. 4

Lab Kat 1: = 79.5, 1.8, 16.3, Lab Kat 2: = 70.9, 3.6, 22.6
Lab Kat 3: = 70.2, 7.0, 24.5, Lab Kat 4: = 66.9, 4.1, 24.1

Fig. 5

Fig. 6

Lab Kat 1: = 79.5, 1.8, 16.3, Lab Kat 2: = 75.2, 2.9, 24.8
Lab Kat 3: = 70.2, 7.0, 24.5, Lab Kat 4: = 65.5, 5.7, 28.8

Fig. 7

p(1) = 0.24, p(2) = 0.30, p(3) = 0.39, p(4) = 0.06
E = 1.79813, $E/E_{max}$ = 0.89907

Fig. 8

Fig. 9a

p(1) = 0.24, p(2) = 0.31, p(3) = 0.12, p(4) = 0.33
E = 1.91273, E/E$_{max}$ = 0.95637

Lab Kat 1 : = 79.5, 1.8, 16 3, Lab Kat 2 : = 75.2, 2.9, 24.8
Lab Kat 3 : = 84.5, 5.4, 18.6, Lab Kat 4 : = 70.8, 6.2, 26.1

Fig. 9b

Fig. 9c

Fig. 9d

Fig. 9e

Fig. 9f

Fig. 9a

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009023952 A1